# EUROPÄISCHE PATENTSCHRIFT

(11) **EP 3 563 991 B1**
(45) Veröffentlichungstag und Bekanntmachung des Hinweises auf die Patenterteilung: **21.06.2023**
(21) Anmeldenummer: 19167466.2
(22) Anmeldetag: 05.04.2019
(51) Int. Cl.: B25J 15/06, B25J 19/06

(54) **UNTERDRUCKHANDHABUNGSVORRICHTUNG**
VACUUM HANDLING DEVICE
DISPOSITIF DE MANIPULATION SOUS VIDE

(30) Priorität: 04.05.2018 DE 102018110741
(43) Veröffentlichungstag der Anmeldung: 06.11.2019
(73) Patentinhaber: J. Schmalz GmbH, 72293 Glatten (DE)
(72) Erfinder: Dunkmann, Walter, verstorben (DE); Schaaf, Walter, 72250 Freudenstadt-Grüntal (DE); Straub, David, 72108 Rottenburg (DE)
(74) Vertreter: DREISS Patentanwälte PartG mbB

(56) Entgegenhaltungen:
- DE-A1-102014 218 295
- DE-U1-202016 101 454
- US-A1- 2017 341 880

## Beschreibung

Die Erfindung betrifft ein Verfahren zum Betreiben einer Unterdruckhandhabungsvorrichtung, insbesondere einer Unterdruckhandhabungsvorrichtung für ein Mensch-Maschinen-Kollaborationssystem. Die Erfindung betrifft ferner eine Unterdruckhandhabungsvorrichtung. Unterdruckhandhabungsvorrichtungen sind aus dem Stand der Technik in vielfältiger Art und Weise vorbekannt. Diese können zur Handhabung von Werkstücken an einer Handhabungseinrichtung, beispielsweise an einem Roboter, angeordnet sein.

Um derartige Unterdruckhandhabungsvorrichtungen in der Industrie im Arbeitsbereich von Personen einsetzen zu können, müssen Sicherheitsvorschriften erfüllt werden. Beispielsweise gelten hier die Vorschriften DIN EN ISO 10218 und/oder ISO/TS 15066. Strenge Sicherheitsvorschriften gelten vor allem dann, wenn - wie bei den Konzepten der Mensch-Maschinen-Kollaboration (MMK), insbesondere der Mensch-Roboter-Kollaboration (MRK), vorgesehen - Mensch und Maschine bzw. Mensch und Roboter zusammen an einem Arbeitsplatz kooperierend arbeiten, ohne dass Sicherheitseinrichtungen, wie beispielsweise ein Schutzzaun zur Trennung der Bedienperson von der Maschine bzw. dem Roboter vorhanden wäre.

Bei der MMK bzw. MRK kann ein fallendes Werkstück durch Abwesenheit einer Sicherheitseinrichtung die Bedienperson direkt treffen und dadurch verletzen.

Zur Sicherung gegen ein Herabfallen eines Werkstücks bei einem Ausfall der Primärenergie zur Erzeugung eines Unterdrucks im Sauggreifer der Unterdruckhandhabungsvorrichtung ist es bekannt, Klemmeinrichtungen, auch als "Angstspanner" bezeichnet, vorzusehen. Diese werden im Betrieb mit Druckluft beaufschlagt. Dadurch wird eine Feder vorgespannt, wobei die Feder bei einem Ausfall der Primärenergie zurückstellt und den Spanner so schließt, dass das gegriffene Werkstück formschlüssig gesichert ist. Das Vorsehen eines derart ausgebildeten Spanners ist teuer, aufwändig und fehleranfällig.

Ferner ist aus der DE 10 2014 218 295 A1 ein Verfahren bekannt, bei dem ein in einem Saugkörper durch Anlegen des Saugkörpers an ein Werkstück gebildeter Unterdruck überwacht wird und bei Unterschreiten eines Soll-Zustands ein Hilfsunterdruck im Saugkörper mittels einer Hilfsunterdruckversorgung erzeugt wird.

Der Erfindung liegt die Aufgabe zugrunde, eine betriebssicher betreibbare Unterdruckhandhabungsvorrichtung, insbesondere zum Einsatz in der Mensch-Maschinen-Kollaboration, weiter insbesondere in der Mensch-Roboter-Kollaboration, bereitzustellen, welche vergleichsweise kostengünstig, einfach und/oder kompakt herstellbar ist und flexibel anpassbar ist.

Diese Aufgabe wird durch ein Verfahren mit den Merkmalen des Anspruchs 1 gelöst. Es ist demnach eine Unterdruckhandhabungsvorrichtung vorgesehen, die einen Sauggreifer umfasst, welcher von einer primären Unterdruckversorgung zur Erzeugung eines für den Betrieb genutzten Unterdrucks gespeist ist.

Das Verfahren dient insbesondere zum Betreiben der Unterdruckhandhabungsvorrichtung in einem Mensch-Maschinen-Kollaborationssystem, weiter insbesondere in einem Mensch-Roboter-Kollaborationssystem. Denkbar wäre allerdings auch, dass das Verfahren zum Betreiben der Unterdruckhandhabungsvorrichtung in einem vollautomatisierten Betrieb dient.

Das Verfahren umfasst dabei die folgenden Schritte:
a) Anlegen des Sauggreifers an ein Werkstück und Aufbau eines Unterdrucks im Sauggreifer mittels der primären Unterdruckversorgung;
b) Halten des Werkstücks bei dessen Handhabung mittels des im Sauggreifer vorhandenen Unterdrucks (insbesondere mittels des von der primären Unterdruckversorgung gelieferten Unterdrucks);
   Überwachen von wenigstens einer Betriebsgröße während der Handhabung; und
c) Erzeugen eines Hilfsunterdrucks im Sauggreifer mittels einer von der primären Unterdruckversorgung unabhängig betreibbaren und/oder unabhängig wirkenden, insbesondere autarken, sekundären Hilfsunterdruckversorgung, wenn die überwachte Betriebsgröße von einem Soll-Zustand abweicht.

Erfindungsgemäß kann dann, wenn die Betriebsgröße von einem Sollzustand abweicht, ein Sicherheitsunterdruck zur Aufrechterhaltung des zur Handhabung erforderlichen Unterdrucks über einen bestimmten Zeitraum bereitgestellt werden. Insbesondere kann die Weiterführung der Handhabung bis zu einem sicheren und/oder definierten Endzustand ermöglicht werden.

Als Betriebsgröße kommen grundsätzlich verschiedenartige messbare Größen in Betracht, welche von dem Betriebszustand der Unterdruckhandhabungsvorrichtung beeinflusst werden und/oder zum Beeinflussen des Betriebszustands variiert werden (z.B. ein in dem Sauggreifer wirkender Unterdruck, ein Volumenstrom von Druckfluid usw.), wie nachfolgend noch weiter erläutert. Die Erfassung der Betriebsgröße erfolgt insbesondere kontinuierlich und unterbrechungsfrei. Denkbar ist jedoch auch, dass die Betriebsgröße nur zeitweise oder getaktet erfasst wird.

Durch das Vorsehen der sekundären Hilfsunterdruckversorgung wird eine Redundanz bei der Unterdruckerzeugung bzw. Unterdruckversorgung bereitgestellt. Dadurch kann die Unterdruckhandhabungsvorrichtung in besonders vorteilhafter Weise in einem MMK- bzw. MRK-System eingesetzt werden. Dabei kann die Unterdruckhandhabungsvorrichtung unmittelbar mit einer Bedienperson interagieren, ohne dass die Bedienperson durch eine Schutzeinrichtung, wie beispielsweise einen Schutzzaun, von der Unterdruckhandhabungsvorrichtung getrennt wäre.

Dadurch, dass die Hilfsunterdruckversorgung autark Hilfsunterdruck bereitstellen kann, kann die Hilfsunterdruckversorgung vollständig unabhängig von einer externen Energieversorgung betrieben werden. Somit kann die Unterdruckhandhabungsvorrichtung auch sicher betrieben werden bzw. in einen sicheren Zustand überführt werden, wenn sämtliche Energiesysteme in der Umgebung der Vorrichtung ausfallen sollten. Dadurch kann insbesondere verhindert werden, dass eine Bedienperson durch ein herabfallendes Werkstück bei einem Ausfall der externen Energieversorgung verletzt wird.

Die Unterdruckhandhabungsvorrichtung kann die primäre Unterdruckversorgung umfassen. Denkbar ist allerdings insbesondere, dass die primäre Unterdruckversorgung nicht Teil der Unterdruckhandhabungsvorrichtung ist, sondern vielmehr Unterdruck bereitstellt und die Unterdruckhandhabungsvorrichtung mit Unterdruck versorgt.

Denkbar ist selbstverständlich auch, dass mehrere Sauggreifer vorhanden sind. Diesen Sauggreifern kann jeweils eine eigene primäre Unterdruckversorgung zugeordnet sein oder es kann eine zentrale primäre Unterdruckversorgung für sämtliche Sauggreifer vorhanden sein. Sind mehrere Sauggreifer vorhanden, so kann jedem Sauggreifer entweder eine eigene sekundäre Hilfsunterdruckversorgung zugeordnet sein oder es kann eine zentrale sekundäre Hilfsunterdruckversorgung für sämtliche Sauggreifer vorgesehen sein.

Eine vorteilhafte Weiterbildung der Erfindung sieht vor, dass in Schritt b) die primäre Betriebsenergie zum Betreiben der primären Unterdruckversorgung als Betriebsgröße überwacht wird, wobei insbesondere bei einem detektierten Ausfall der primären Betriebsenergie Schritt c) durchgeführt wird.

Dabei kann bzw. können insbesondere der elektrische Betriebsstrom und/oder die elektrische Betriebsspannung überwacht werden. Falls die primäre Betriebsenergie ausfällt, kann der Unterdruck im Sauggreifer durch die sekundäre Hilfsunterdruckversorgung jedenfalls über einen gewissen Zeitraum aufrechterhalten werden, und das Werkstück fällt somit nicht oder jedenfalls nicht sofort bei Ausfall der primären Betriebsenergie herunter, so dass die Gefahr einer Verletzung einer mit der Unterdruckhandhabungsvorrichtung interagierenden Bedienperson vermieden oder jedenfalls verringert wird.

Eine weitere vorteilhafte Ausgestaltung der Erfindung sieht vor, dass in Schritt c) zusätzlich eine Aktion ausgelöst wird. Die Aktion kann beispielsweise die Ausgabe eines Warnsignals an eine Bedienperson umfassen. Dieses Signal kann akustisch, optisch und/oder haptisch wahrnehmbar sein. Das Signal kann einer Bedienperson zum einen signalisieren, dass sie sich von der Unterdruckhandhabungsvorrichtung entfernen soll. Andererseits kann damit auch signalisiert werden, dass die Bedienperson die Unterdruckhandhabungsvorrichtung manuell durch einen Bedienereingriff zum sicheren Ablegen des Werkstücks ansteuert.

Zusätzlich oder alternativ kann die Aktion die Unterbrechung der Bewegung der Unterdruckhandhabungsvorrichtung oder die Bewegung der Unterdruckhandhabungsvorrichtung zu einem sicheren Endzustand umfassen. Durch diese Maßnahme kann eine Verletzung einer Bedienperson in besonders vorteilhafter Weise vermieden werden. Der Endzustand kann dabei insbesondere an einer Position liegen, die von einer Bedienperson nicht erreichbar ist.

Denkbar ist auch, dass in Schritt b) der im Sauggreifer vorliegende Druck als Betriebsgröße erfasst wird, wobei Schritt c) durchgeführt wird, wenn der Druck im Sauggreifer einen Grenzwert überschreitet. Zusätzlich oder alternativ kann in Schritt b) die Druckänderung erfasst werden, sodass Schritt c) durchgeführt wird, wenn die Druckänderung im Sauggreifer einen Grenzwert überschreitet. Somit kann das Verfahren in besonders vorteilhafter Weise auch dann eingesetzt werden, wenn beispielsweise am Sauggreifer ein Defekt, wie beispielsweise eine Beschädigung oder ein Verschleiß auftritt und somit der von der primären Unterdruckversorgung bereitgestellte Unterdruck nicht zur sicheren Handhabung ausreicht.

Vorteilhafterweise wird vor Schritt a) ein Diagnosezyklus durchgeführt, wobei der Diagnosezyklus folgende Schritte umfasst:
ad) Anlegen des Sauggreifers an ein Werkstück und Aufbau eines Unterdrucks im Sauggreifer mittels der primären Unterdruckversorgung;
bd) Erfassen der Druckänderung im Sauggreifer über die Zeit; und
cd) Überprüfen, ob die geplante Handhabung mittels der Unterdruckhandhabungsvorrichtung sicher durchführbar ist.

Der Diagnosezyklus ermöglicht eine zusätzliche Absicherung der Unterdruckhandhabungsvorrichtung. Dadurch kann vor der geplanten Handhabung eines Werkstücks überprüft werden, ob sicherheitstechnische Kriterien erfüllt sind. Insbesondere kann überprüft werden, ob im Normalbetrieb ein sicheres Halten des handzuhabenden Werkstücks durch die primäre Unterdruckversorgung gewährleistet ist. Zusätzlich oder alternativ kann geprüft werden, ob für die geplante Handhabung der von der sekundären Hilfsunterdruckversorgung bereitstellbare Hilfsunterdruck ausreicht, um das Werkstück im Fehlerfall jedenfalls so lange sicher zu halten, bis eine Verletzungsgefahr der kollaborierenden Person ausgeschlossen oder jedenfalls minimiert ist.

In diesem Zusammenhang ist denkbar, dass vor der Durchführung des Diagnosezyklus Parameter der geplanten Handhabung, wie beispielsweise Wegstrecke und Dauer erfasst werden, um darauf basierend zu überprüfen, ob eine sichere Handhabung möglich ist. Dadurch kann beispielsweise verhindert werden, dass der Handhabungsprozess gestartet wird, obwohl die Handhabungsvorrichtung nicht zur Handhabung des jeweiligen Werkstücks ausgelegt ist. Beispielsweise kann festgestellt werden, ob ein Defekt an der Handhabungsvorrichtung, insbesondere durch Verschleiß, aufgetreten ist.

Anstatt einer Unterdruckbeaufschlagung in Schritt ad) ist auch denkbar, einen Überdruck im Sauggreifer anzulegen und die daraus resultierende Druckänderung zu erfassen. Ferner wäre auch denkbar, einen Volumenstrom im Sauggreifer und/oder einen Massenstrom zu erfassen und darauf basierend zu überprüfen, ob eine sichere Handhabung möglich ist.

Denkbar wäre weiterhin, dass Schritt bd) nicht erst dann durchgeführt wird, wenn in Schritt ad) der gewünschte Unterdruck angelegt worden ist, sondern dass Schritt bd) bereits während des Aufbaus des Unterdrucks in Schritt ad) durchgeführt wird.

Denkbar wäre schließlich auch, dass in Schritt cd) das Ergebnis lautet, dass eine sichere Handhabung auch ohne die sekundäre Hilfsunterdruckversorgung möglich ist, so dass diese insbesondere zur Energieeinsparung deaktiviert wird.

Zusätzlich oder alternativ kann vor Schritt a) ein Diagnosezyklus durchgeführt wird, welcher folgende Schritte umfasst:
- Erfassen des handzuhabenden Werkstücks;
- Ermitteln einer hinterlegten Soll-Druckänderung über die Zeit für die Durchführung der Schritte ad) und bd) des obengenannten Verfahrens aus einer Datenbank; und
- Überprüfen, ob die geplante Handhabung mittels der Unterdruckhandhabungsvorrichtung sicher durchführbar ist.

Das Erfassen des handzuhabenden Werkstücks kann durch eine manuelle Eingabe durch die Bedienperson erfolgen. Dabei können insbesondere Materialparameter wie die Art des Materials und/oder dessen Rauigkeit und/oder Luftdurchlässigkeit eingegeben werden. Zusätzlich oder alternativ wäre auch eine sensorische Erfassung des handzuhabenden Werkstücks, beispielsweise die sensorische Erfassung der Oberflächenrauigkeit, denkbar. Selbstverständlich ist zusätzlich oder alternativ denkbar, dass Systemparameter erfasst werden, wie beispielsweise Parameter der primären Unterdruckversorgung und/oder der sekundären Hilfsunterdruckversorgung und/oder Prozessparameter, wie die geplante Beschleunigung und/oder Geschwindigkeit bei der geplanten Handhabung, und/oder der geplante an das Werkstück zur Handhabung anzulegende Unterdruck.

Darauf basierend kann eine Soll-Druckänderung aus einer Datenbank ermittelt werden. In der Datenbank kann folglich hinterlegt sein, welche Druckänderungen über die Zeit für ein System aus Unterdruckhandhabungsvorrichtung und dem erfassten, daran angesaugten Werkstück über die Zeit zu erwarten ist, wenn der Sauggreifer der Unterdruckhandhabungsvorrichtung an das Werkstück angelegt wird und ein Unterdruck im Sauggreifer aufgebaut wird (vgl. Schritte ad) und bd) des oben genannten Verfahrens). Darauf basierend kann überprüft werden, ob der geplante Handhabungsprozess überhaupt sicher durchführbar ist. Beispielsweise kann überprüft werden, ob die Unterdruckhandhabungsvorrichtung das Werkstück während des Handhabungsprozesses sicher halten kann, und ob im Falle eines Ausfalls der primären Unterdruckversorgung ein ausreichender Hilfsunterdruck durch die Hilfsunterdruckversorgung bereitstellbar ist.

Denkbar ist, dass nach dem Ermitteln der Soll-Druckänderung aus der Datenbank das Diagnose-Verfahren gemäß den Schritten ab) bis dd) zusätzlich durchgeführt wird. Dabei wird die Soll-Druckänderung über die Zeit mit der tatsächlich gemessenen Druckänderung verglichen. Darauf basierend wird überprüft, ob die geplante Handhabung mittels der Unterdruckhandhabungsvorrichtung sicher durchführbar ist. Somit kann in vorteilhafter Weise überprüft werden, ob die zu erwartende Soll-Druckänderung auch tatsächlich im System vorhanden ist. Dadurch kann die Sicherheit der Unterdruckhandhabungsvorrichtung beim Einsatz im MMK- bzw. MRK-Umfeld weiter erhöht werden.

Einer der beiden vorgenannten Diagnosezyklen oder beide Diagnosezyklen können dabei vor jedem einzelnen Handhabungsvorgang durchgeführt werden. Dankbar wäre allerdings insbesondere, dass der Diagnosezyklus bzw. die Diagnosezyklen vor einer Serie gleichartiger Handhabungsvorgänge lediglich einmal durchgeführt wird bzw. werden.

Denkbar ist weiterhin, dass ein Testzyklus vor dem Diagnosezyklus durchgeführt wird, wobei zur Erfassung und Hinterlegung einer Soll-Druckänderung für wenigstens ein Werkstück und/oder einen Zustand der Unterdruckhandhabungsvorrichtung der Diagnosezyklus gemäß den Schritten ad) bis cd) durchgeführt wird.

Durch diesen Testzyklus können folglich Soll-Druckänderungen für verschiedene Werkstücke mit unterschiedlichen Materialeigenschaften, beispielsweise unterschiedlichen Oberflächenrauigkeiten, erfasst werden. Ferner können unterschiedliche Zustände der Unterdruckhandhabungsvorrichtung beim Handhaben eines Werkstücks ermittelt und in der Datenbank hinterlegt werden, wobei insbesondere unterschiedliche Lebensdauerzustände erfasst werden können.

Denkbar ist, dass der Diagnosezyklus zusätzlich oder alternativ während des Handhabens des Werkstücks durchgeführt wird. Denkbar ist also, dass auch während eines Handhabungsprozesses zwischenzeitlich überprüft wird, ob die Unterdruckhandhabungsvorrichtung das Werkstück sicher transportieren kann.

Die eingangs gestellte Aufgabe wird auch gelöst durch eine Unterdruckhandhabungsvorrichtung, welche zur Ausführung des erfindungsgemäßen Verfahrens eingerichtet ist, mit einem Sauggreifer und mit einer primären Unterdruckversorgung zur Erzeugung eines Unterdrucks zum Betreiben des Sauggreifers, wobei für den Sauggreifer eine sekundäre Hilfsunterdruckversorgung vorgesehen ist, und wobei die Hilfsunterdruckversorgung zur autarken Erzeugung und/oder Bereitstellung von Hilfsunterdruck im Sauggreifer unabhängig von einer externen Energieversorgung ausgebildet ist. Folglich kann auch dann, wenn die gesamte Energieversorgung im Umfeld der Unterdruckhandhabungsvorrichtung ausfällt, eine sichere Handhabung des Werkstücks gewährleistet werden, indem autark ein Hilfsunterdruck in den Sauggreifer zur sicheren Halterung des Werkstücks jedenfalls über einen gewissen Zeitraum anlegbar ist. Die primäre Unterdruckversorgung kann Teil der Unterdruckhandhabungsvorrichtung sein. Denkbar ist allerdings insbesondere, dass die primäre Unterdruckversorgung kein Teil davon ist, sondern vielmehr mit der Unterdruckhandhabungsvorrichtung zur Erzeugung und Bereitstellung eines Arbeitsunterdrucks verbindbar ist. Selbstverständlich kann die Unterdruckhandhabungsvorrichtung auch mehrere Sauggreifer aufweisen. Diese können jeweils eine eigene primäre Unterdruckversorgung und/oder eine sekundäre Hilfsunterdruckversorgung aufweisen. Denkbar wäre allerdings insbesondere, dass lediglich eine zentrale primäre Unterdruckversorgung und/oder eine sekundäre Hilfsunterdruckversorgung vorgesehen ist bzw. sind.

Eine besonders bevorzugte Weiterbildung der Erfindung sieht vor, dass eine Steuereinrichtung vorgesehen ist, die zur Ausführung des Verfahrens nach einem der vorhergehenden Ansprüche ausgebildet und eingerichtet ist. Dabei kann die Steuereinrichtung zur Überwachung der Betriebsgröße eine Sensoreinrichtung umfassen. Die Steuereinrichtung kann folglich insbesondere einen Drucksensor zur Erfassung des Unterdrucks im Sauggreifer umfassen. Zusätzlich oder alternativ kann ein Strom-/Spannungssensor vorhanden sein, um zu ermitteln, ob die Primärenergieversorgung zum primären Unterdruckerzeuger gewährleistet ist. Bei einer pneumatischen Unterdruckerzeugung wäre auch denkbar, zusätzlich oder alternativ zu einem Strom-/Spannungssensor einen Drucksensor und/oder einen Volumenstromsensor vorzusehen.

Besonders bevorzugt ist, wenn die Unterdruckhandhabungsvorrichtung eine Hilfsenergieeinrichtung zum autarken Betreiben der Hilfsunterdruckversorgung umfasst. Diese autark bereitgestellte Sekundärenergie kann beispielsweise in Form von Druckluft oder insbesondere in Form von elektrischer Energie vorliegen. Die elektrische Energie kann in einem Akkumulator, einer Batterie, einem Kondensator oder einer unterbrechungsfreien Spannungsversorgung (USV) vorgesehen sein. Auch eine Federvorspannung wäre denkbar.

Die Hilfsunterdruckversorgung kann ferner insbesondere einen Hilfsunterdruckerzeuger umfassen. Dabei kann es sich beispielsweise um einen pneumatischen Ejektor, eine elektrische Pumpe, einen Vakuumspeicher, einen Vakuumspeicher mit einer Pumpe oder um eine vorgespannte Feder mit einem Kolben und einem Zylinder handeln.

Vorteilhafterweise umfasst der Sauggreifer eine Warneinrichtung. Die Warneinrichtung kann insbesondere zur Warnung einer Bedienperson ausgebildet sein, wenn die sekundäre Hilfsunterdruckversorgung aktiviert wird und somit eine Abweichung vom normalen Betriebsfall der Unterdruckversorgungseinrichtung auftritt. Bei mehreren vorhandenen Sauggreifern kann entweder pro Sauggreifer eine Warneinrichtung vorgesehen sein. Insbesondere kann jedoch eine zentrale Warneinrichtung vorgesehen sein.

Vorzugsweise umfasst der Sauggreifer einen Saugkörper, wobei am Sauggreifer ein Schutzelement zum Schutz des Saugkörpers vor Beschädigung angeordnet ist. Der Saugkörper umfasst dabei insbesondere eine Saugstelle zur Anlage an ein Werkstück. Der Saugkörper kann beispielsweise einen Saugraum zur Anlage an ein Werkstück umfassen. Denkbar wäre alternativ auch, dass der Saugkörper einen Saugraum mit einer Saugwand umfasst, wobei die Saugwand eines oder insbesondere mehrere Durchbrüche zur Anlage eines Unterdrucks an ein Werkstück umfasst. Das Schutzelement kann beispielsweise als glockenförmige Haube ausgebildet sein und kann insbesondere einen mechanischen Schutz des Saugkörpers vor Beschädigung und/oder Verschleiß bereitstellen. Insbesondere kann das Schutzelement aus Vollmaterial, wie beispielsweise als Drehteil oder Blechumformteil, ausgebildet sein. Ferner ist auch denkbar, dass das Schutzelement als Schutzhaube aus Lochblech oder einem sonstigen Löcher aufweisenden Material besteht, um einen visuelle Sicht zum Saugkörper zu behalten.

Dabei ist das Schutzelement so anzuordnen, dass ein Ansaugen des Werkstücks noch sicher möglich ist. In diesem Zusammenhang kann vorgesehen sein, dass im angesaugten Zustand ein Abstand zwischen dem Schutzelement und dem Werkstück vorhanden ist. Andererseits ist auch denkbar, dass das Schutzelement elastisch nachgiebig ist oder entlang des Sauggreifers verlagerbar angeordnet ist, um eine Nachgiebigkeit beim Anordnen eines Werkstücks bereitzustellen. Insbesondere beim Diagnosezyklus, wird zur Bestimmung, ob ein Handhabungsprozess sicher durchführbar ist, davon ausgegangen, dass keine Veränderung an der Unterdruckhandhabungsvorrichtung beispielsweise durch Beschädigung über die Zeit auftritt. Insbesondere dann, wenn der Diagnosezyklus vor einer Serie von Handhabungsvorgängen nur einmal durchgeführt wird, kann beispielsweise eine Trendextrapolation durchgeführt werden, um zu überprüfen, ob der von der Hilfsunterdruckversorgung bereitstellbare Hilfsunterdruck ausreicht, um über die gesamte geplante Dauer des Handhabungszyklus eine sichere Handhabung zu gewährleisten. Dabei wird von gleichbleibenden mechanischen Randbedingungen ausgegangen, was insbesondere durch das Vorsehen eines Schutzelements am Sauggreifer sicherstellbar ist.

Eine erfindungsgemäße Unterdruckhandhabungsvorrichtung und eine Bedienperson, welche mit der Unterdruckhandhabungsvorrichtung zusammenarbeitet, bilden ein Mensch-Maschinen-Kollaborationssystem, insbesondere ein Mensch-Roboter-Kollaborationssystem. Ein solches MMK- bzw. MRK-System kann insbesondere schutzeinrichtungsfrei, insbesondere trennwandfrei, ausgeführt werden, so dass eine Bedienperson unmittelbar mit der Unterdruckhandhabungsvorrichtung interagiert. Die Unterdruckhandhabungsvorrichtung kann insbesondere als Endeffektor an einem Roboter angeordnet sein. Ferner kann das System insbesondere so ausgebildet sein, dass einschlägige Normen, wie beispielsweise die DIN EN ISO 10218 und/oder die ISO/TS 15066 erfüllt werden.

Weitere Einzelheiten und vorteilhafte Ausgestaltungen der Erfindung sind der folgenden Beschreibung zu entnehmen, anhand derer die in den Figuren dargestellten Ausführungsformen der Erfindung näher beschrieben und erläutert werden.

Es zeigen:
- Figur 1: Eine schematische Darstellung einer Unterdruckhandhabungsvorrichtung gemäß einer ersten Ausführungsform;
- Figur 2: eine schematische Darstellung einer Unterdruckhandhabungsvorrichtung gemäß einer zweiten Ausführungsform;
- Figur 3: ein Ablaufdiagramm eines Diagnosezyklus-Verfahrens vor der Handhabung eines Werkstücks mittels einer Unterdruckhandhabungsvorrichtung gemäß den Figuren 1 oder 2;
- Figur 4: eine beispielhafte Darstellung eines aus der Durchführung des Verfahrens nach Figur 3 erhaltenen Druck-Zeit-Diagramms; und
- Figur 5: eine schematische Darstellung eines Sauggreifers für ein Unterdruckhandhabungssystem nach Figur 1 oder Figur 2 gemäß einer ersten Ausführungsform in einer ersten Position (a) und einer zweiten Position (b), sowie gemäß einer zweiten Ausführungsform (c).

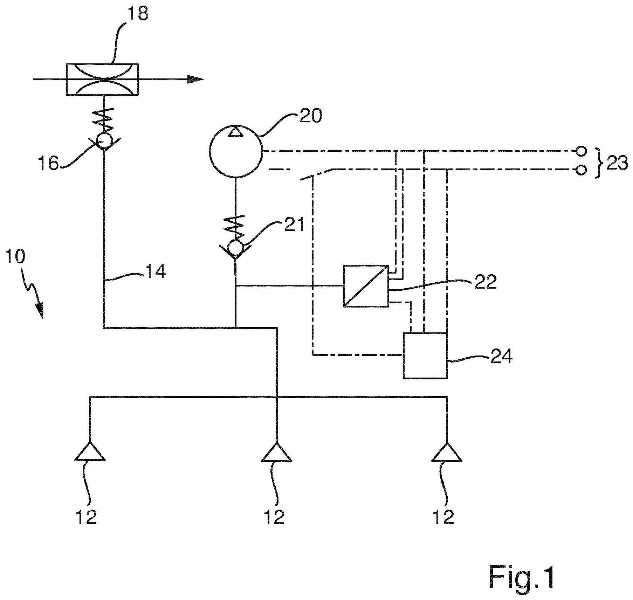

Figur 1 zeigt eine insgesamt mit dem Bezugszeichen 10 versehene Unterdruckhandhabungsvorrichtung 10 mit mehreren Sauggreifern 12. Die Sauggreifer 12 sind über eine gemeinsame Fluidleitung 14 über ein Rückschlagventil 16 an eine primäre Unterdruckversorgung 18 angeschlossen. Die primäre Unterdruckversorgung 18 ist insbesondere nicht Teil der Unterdruckhandhabungsvorrichtung 10. Die primäre Unterdruckversorgung 18 wird insbesondere von einer externen Energiequelle angetrieben. Die Unterdruckversorgung 18 kann beispielsweise nach dem Venturi-Prinzip betrieben werden. An die gemeinsame Fluidleitung 14 ist eine sekundäre Hilfsunterdruckversorgung 20 in Form einer Unterdruckpumpe über ein Rückschlagventil 21 angeschlossen. Ferner umfasst die Unterdruckhandhabungsvorrichtung 10 eine Steuereinrichtung 24 und eine Hilfsenergieeinrichtung 23, insbesondere eine Spannungsquelle, beispielsweise in Form eines Akkumulators, der elektrische Energie gespeichert hat. Insgesamt ist die Hilfsunterdruckversorgung 20 zusammen mit der Hilfsenergieeinrichtung 23 völlig autark ausgebildet und kann unabhängig von einer externen Energieversorgung betrieben werden. Insbesondere kann bei einem Ausfall der externen Betriebsenergieversorgung für die primäre Unterdruckversorgung 18 die Hilfsunterdruckversorgung 20 aktiviert werden.

Die Unterdruckversorgungsvorrichtung 10 ist insbesondere für die Mensch-Maschinen-Kollaboration ausgebildet. Insbesondere kann die Unterdruckhandhabungsvorrichtung 10 an einem Roboter ausgebildet sein, so dass ein Mensch-Roboter-Kollaborationssystem ausgebildet wird. Dabei kann eine Bedienperson unmittelbar mit der Unterdruckhandhabungsvorrichtung 10 interagieren und zwar insbesondere ohne trennende Schutzeinrichtungen, wie beispielsweise eine Trennwand.

Die Funktionsweise der Unterdruckhandhabungsvorrichtung 10 ist sodann wie folgt:
Um ein nicht gezeigtes Werkstück zu handhaben, werden die Sauggreifer 12 an das Werkstück angelegt. Sodann wird mittels der primären Unterdruckversorgung 18 ein Unterdruck in den Sauggreifern 12 aufgebaut, so dass das Werkstück angesaugt wird. Daraufhin kann das Werkstück gehandhabt, insbesondere transportiert, werden, wobei das Werkstück von den Sauggreifern 12 sicher gehalten wird.

Während des Handhabungsprozesses wird von der Steuereinrichtung 24 überwacht, ob die primäre Unterdruckversorgung 18 mit primärer Betriebsenergie betrieben wird, so dass ein Unterdruck in den Sauggreifern 12 sichergestellt ist. Fällt die primäre Betriebsenergie aus und besteht somit die Gefahr, dass der Unterdruck in den Sauggreifern 12 absinkt und somit das Werkstück auf die Bedienperson fällt und diese verletzt, so steuert die Steuereinrichtung 24 die Hilfsenergieeinrichtung 23 an, so dass die Unterdruckpumpe 20 in Betrieb genommen wird und damit über die sekundäre Hilfsunterdruckversorgung 20 ein Hilfsunterdruck in den Sauggreifern 12 aufgebaut wird. Damit wird ein ausreichender Unterdruck zum Halten des Werkstücks in den Sauggreifern 12 jedenfalls über einen gewissen Zeitraum bereitgestellt. Wenn die Steuereinrichtung 24 einen Ausfall der primären Unterdruckversorgung 18 detektiert, kann zudem die Steuereinrichtung 24 eine nicht gezeigte Warneinrichtung ansteuern, so dass die Bedienperson beispielsweise über ein optisches und/oder akustisches Signal gewarnt wird. Zusätzlich oder alternativ kann die Steuereinrichtung 24 auch wenigstens einen Drucksensor 22 umfassen. Ein Drucksensor 22 kann zusätzlich oder alternativ zur gezeigten Anordnung unterhalb des Rückschlagventils 21 auch in einem oder allen Sauggreifern 12 vorgesehen sein. Dann, wenn der Druck bzw. die Druckänderungsrate in einem oder allen Sauggreifern 12 plötzlich ansteigt und der Druck bzw. die Druckänderungsrate einen Grenzwert übersteigt, so kann die Hilfsunterdruckversorgung 20 aktiviert werden.

Ferner kann die Steuereinrichtung 24 so ausgebildet sein, dass bei Aktivierung der Hilfsunterdruckversorgung 20 auch eine Bewegung der Unterdruckhandhabungsvorrichtung 10 in eine gesicherte Endposition, beispielsweise in eine Position fernliegend von einer möglichen Position der Bedienperson, durchgeführt wird. Somit kann das Werkstück dann, wenn der erzeugte Hilfsunterdruck nicht mehr ausreichen sollte, von den Sauggreifern 12 abfallen ohne die Bedienperson zu schädigen.

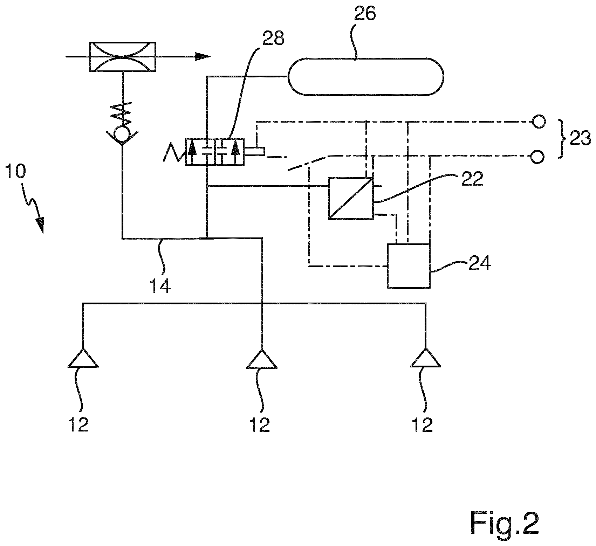

Im Unterschied zur Figur 1 umfasst Figur 2 keine elektrisch betreibbare Pumpe 20, sondern einen Unterdruckspeicher 26, der über ein Steuerungsventil 28 mit der gemeinsamen Fluidleitung 14 verbunden ist. Dabei kann im Bedarfsfall das Steuerungsventil 28 von der Steuereinrichtung 24 unter Verwendung der Hilfsenergieeinrichtung 23 so angesteuert werden, dass das Steuerventil 28 öffnet und somit eine Fluidverbindung zwischen der gemeinsamen Fluidleitung 14 und dem Unterdruckspeicher 26 hergestellt wird. Somit kann ein Hilfsunterdruck in die Sauggreifer 12 zur Aufrechterhaltung eines hinreichenden Unterdrucks über einen gewissen Zeitraum eingebracht werden kann.

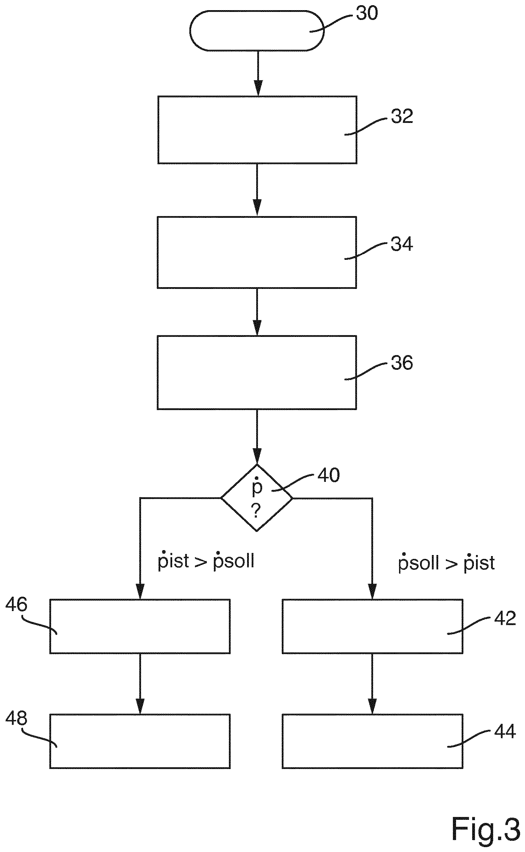

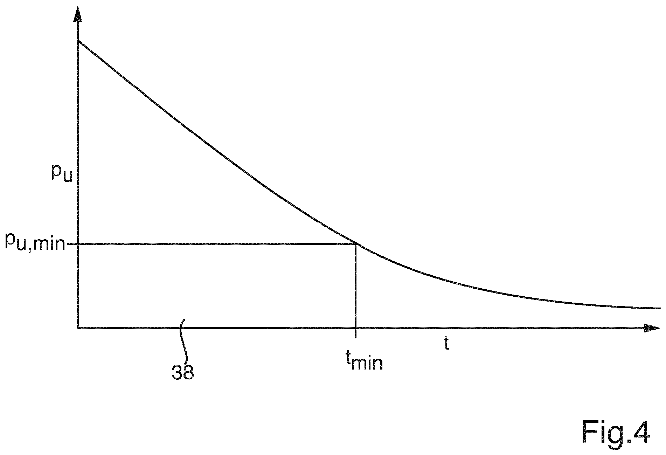

Bevor ein Handhabungsprozess gestartet wird, kann die Steuereinrichtung 24 einen Diagnosezyklus durchführen, der anhand der Figuren 3 und 4 im Folgenden näher beschrieben wird:
Eine Bedienperson kann in Schritt 30 den Diagnosezyklus starten. Dieser Start erfolgt bevor ein geplanter Handhabungsprozess eines Werkstücks durchgeführt wird. Alternativ kann der Diagnosezyklus durch die Steuereinrichtung 24 auch automatisch gestartet werden.

Sodann wird in Schritt 32 das zu handhabende Werkstück erfasst. Dies kann entweder durch eine manuelle Eingabe der Bedienperson erfolgen oder es kann eine sensorische Erfassung des Werkstücks erfolgen. Hierzu kann die Unterdruckhandhabungsvorrichtung eine nicht gezeigte Sensoreinrichtung aufweisen. Dabei können verschiedene Parameter des Werkstücks, wie beispielsweise dessen Oberflächenrauigkeit und/oder dessen Luftdurchlässigkeit und/oder dessen Gewicht, erfasst werden.

Darauf basierend kann in Schritt 34 aus einer Datenbank, die von der Steuereinrichtung 24 ansteuerbar ist, eine theoretisch und/oder experimentell ermittelte Soll-Druckänderung über die Zeit abgefragt werden. Mit der Soll-Druckänderung ist der Verlauf des Unterdrucks gemeint, wenn in den Sauggreifern 12 ein Unterdruck an das Werkstück angelegt wird und danach die Leckage ausgewertet wird. Dieser Druckverlauf kann beispielsweise wie in Figur 4 gezeigt aussehen. Dabei ist in der Datenbank folglich für einen oder mehrere Parameter des Werkstücks, beispielsweise dessen Luftdurchlässigkeit und/oder Oberflächenrauigkeit, im Zusammenspiel mit der verwendeten Unterdruckhandhabungsvorrichtung 10 ein theoretisch errechneter und/oder experimentell ermittelter Solldruck-Änderungsverlauf hinterlegt.

Daraufhin kann dieser Soll-Druckänderungsverlauf in Schritt 36 überprüft werden. Hierzu werden die Sauggreifer 12 an das Werkstück angelegt und es wird ein Unterdruck in den Sauggreifern 12 mittels der primären Unterdruckversorgung 18 aufgebaut, wobei das Werkstück angesaugt wird. Daraufhin wird der Druckverlauf in den Sauggreifern 12 mittels einer Sensoreinrichtung ermittelt und an die Steuereinrichtung 24 übermittelt. Wenn der Druckabfall über die Zeit außerhalb des in Figur 4 eingezeichneten kritischen Bereichs 38 liegt, so wird der Handhabungsprozess in Schritt 42 der Figur 3 freigegeben. Damit kann das Werkstück in Schritt 44 gehandhabt werden.

Wenn in Schritt 40 allerdings festgestellt wird, dass die Druckänderung im kritischen Bereich 38 liegt, so wird Schritt 46 ausgeführt und es wird keine Freigabe für den Handhabungsprozess gegeben. Daraus folgt, dass der Handhabungsprozess in Schritt 48 abgebrochen wird. Dabei bedeutet das Erreichen des kritischen Bereichs 38 entweder, dass die geplante Handhabung von der primären Unterdruckversorgung nicht sicher durchgeführt werden könnte, also dass kein hinreichender Unterdruck zur sicheren Halterung des Werkstücks aufgebaut werden könnte. Weiterhin kann dies auch bedeuten, dass zwar der primär erzeugte Unterdruck zur sicheren Handhabung ausreichen würde, allerdings die sekundäre Unterdruckversorgung 20 im Falle eines Ausfalls der primären Unterdruckversorgung 18 keinen hinreichenden Unterdruck bereitstellen könnte, um ein sicheres Handhaben des Werkstücks im Falle eines Ausfalls der primären Energie sicherzustellen.

Der Diagnosezyklus gemäß den Figuren 3 und 4 kann bei jeder einzelnen Handhabung eines Werkstücks durchgeführt werden. Allerdings ist insbesondere denkbar, dass eine Serie gleichartiger Handhabungsprozesse mit gleichartigen Werkstücken durchgeführt wird und der Diagnosezyklus lediglich einmal vor der seriellen Abfolge der Handhabungsprozesse durchgeführt wird.

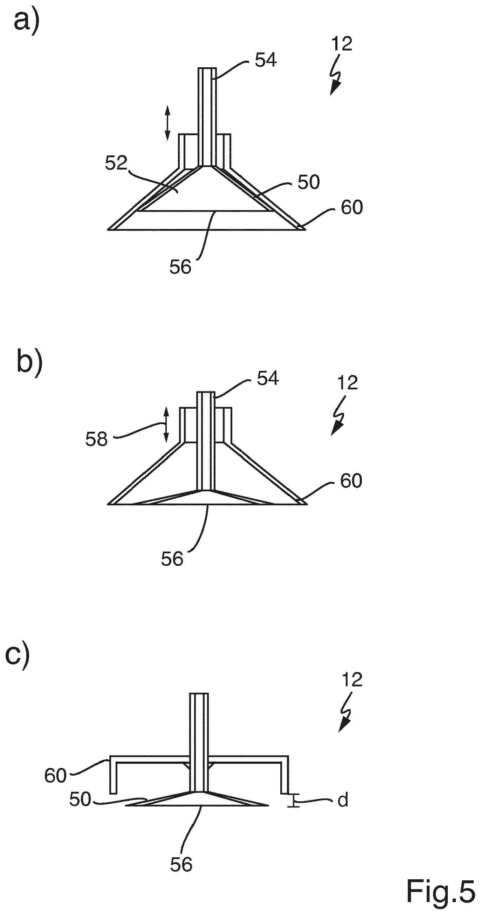

In Figur 5 sind zwei mögliche Ausgestaltungen von Sauggreifern 12 gezeigt. Der Sauggreifer 12 gemäß den Figuren 5a bis 5c umfasst einen Saugkörper 50, der einen Saugraum 52 begrenzt, der mit Unterdruck über einen zylindrischen Fortsatz 54 beaufschlagbar ist. Ferner umfasst der Saugkörper 50 eine Saugwand 56 mit nicht gezeigten Löchern, wobei ein Werkstück an der Saugwand 56 zum Handhaben zur Anlage kommen kann.

In der Ausführungsform gemäß den Figuren 5a und 5b ist an dem Fortsatz 54 ein in Längsrichtung 58 des Fortsatzes 54 bewegbares Schutzelement 60 angeordnet. Dieses Schutzelement 60 ist als glockenförmige Haube ausgebildet. Die Schutzhaube 60 kann insbesondere zur Ausbildung einer weichen Kontaktfläche elastisch nachgiebig ausgebildet sein.

In der Ausführungsform gemäß Figur 5c ist das Schutzelement 60 fest am Fortsatz 54 angeordnet und weist einen Abstand d zur Saugwand 56 des Saugkörpers 50 auf, so dass das Werkstück vom Schutzelement 60 nicht beschädigt werden kann und dennoch ein Schutz des Saugkörpers 50 vor Beschädigung bereitgestellt werden kann. Dabei kann die Schutzhaube aus einem Drehteil oder Blechumformteil hergestellt sein, welches insbesondere Löcher zur Sichtkontrolle aufweisen kann. Insgesamt dient das Schutzelement 60 dazu, die Gefahr einer Beschädigung insbesondere des Saugkörper 50 des Sauggreifers 12 zu verringern, so dass eine mögliche Veränderung der Eigenschaften der Unterdruckhandhabungsvorrichtung 10 über die Dauer des Handhabungsprozesses verringert werden kann.

Dies kann insbesondere hinsichtlich des in den Figuren 3 und 4 gezeigten Diagnosezyklus von Bedeutung sein. Wenn dort nämlich in den Schritten 40 bis 46 geprüft wird, ob ein geplanter serieller Handhabungsprozess sicher durchführbar ist, kann eine Extrapolation der erwartenden mechanischen Änderung der Unterdruckhandhabungsvorrichtung 10 über die Prozessdauer durchgeführt werden. Dabei wird insbesondere davon ausgegangen, dass sich die mechanischen Randbedingungen über die Prozessdauer nicht bzw. nur definiert ändern, also dass beispielsweise keine Löcher in Leitungen, Schläuchen oder in den Sauggreifern 12 entstehen, beispielsweise durch Abreißen von Schläuchen, oder durch Aufschlitzen der Sauggreifer 12 durch scharfkantige Werkstücke (z.B. gratiges Blech). Ferner kann eine mutwillige Beschädigung mit scharfen Werkzeugen nicht extrapoliert werden. Somit dient das Schutzelement 60 insbesondere dazu, zu verhindern, dass sich mechanische Randbedingungen über die Zeit ändern.

## Patentansprüche

1. Verfahren zum Betreiben einer Unterdruckhandhabungsvorrichtung (10), insbesondere für ein Mensch-Maschinen-Kollaborationssystem, umfassend einen Sauggreifer (12), welcher zur Erzeugung eines Unterdrucks mit einer primären Unterdruckversorgung (18) verbindbar ist, das Verfahren umfassend die folgenden Schritte:
a) Anlegen des Sauggreifers (12) an ein Werkstück und Aufbau eines Unterdrucks im Sauggreifer (12) mittels der primären Unterdruckversorgung (18);
b) Halten des Werkstücks bei dessen Handhabung mittels des im Sauggreifer (12) vorhandenen Unterdrucks sowie Überwachen von wenigstens einer Betriebsgröße während der Handhabung; und
c) Erzeugen eines Hilfsunterdrucks im Sauggreifer (12) mittels einer autarken, sekundären Hilfsunterdruckversorgung (20, 26), wenn die überwachte Betriebsgröße von einem Soll-Zustand abweicht.

2. Verfahren nach Anspruch 1, wobei in Schritt b) die primäre Betriebsenergie zum Betreiben der primären Unterdruckversorgung (18) als Betriebsgröße überwacht wird, und wobei insbesondere bei einem detektierten Ausfall der primären Betriebsenergie Schritt c) durchgeführt wird.

3. Verfahren nach Anspruch 1 oder 2, wobei in Schritt c) zusätzlich eine Aktion ausgelöst wird.

4. Verfahren nach Anspruch 3, wobei die Aktion die Ausgabe eines Warnsignals umfasst, und/oder wobei die Aktion die Unterbrechung der Bewegung der Unterdruckhandhabungsvorrichtung (10) oder die Bewegung der Unterdruckhandhabungsvorrichtung (10) zu einem sicheren Endzustand umfasst.

5. Verfahren nach einem der vorhergehenden Ansprüche, wobei in Schritt b) der Druck und/oder die Druckänderung als Betriebsgröße im Sauggreifer (12) erfasst wird, und wobei Schritt c) durchgeführt wird, wenn der Druck und/oder die Druckänderung im Sauggreifer (12) einen Grenzwert überschreitet.

6. Verfahren nach einem der vorhergehenden Ansprüche, wobei vor Schritt a) ein Diagnosezyklus durchgeführt wird, wobei der Diagnosezyklus folgende Schritte umfasst:
ad) Anlegen des Sauggreifers (12) an ein Werkstück und Aufbau eines Unterdrucks im Sauggreifer (12) mittels der primären Unterdruckversorgung (18);
bd) Erfassen der Druckänderung im Sauggreifer (12) über die Zeit; und
cd) Überprüfen, ob die geplante Handhabung mittels der Unterdruckhandhabungsvorrichtung (10) sicher durchführbar ist.

7. Verfahren nach einem der vorhergehenden Ansprüche 1 bis 5, wobei vor Schritt a) ein Diagnosezyklus durchgeführt wird, wobei der Diagnosezyklus folgende Schritte umfasst:
- Erfassen des handzuhabenden Werkstücks;
- Ermitteln einer hinterlegten Soll-Druckänderung über die Zeit für die Durchführung der Schritte ad) und bd) des Verfahrens nach Anspruch 6 aus einer Datenbank; und
- Überprüfen, ob die geplante Handhabung mittels der Unterdruckhandhabungsvorrichtung (10) sicher durchführbar ist.

8. Verfahren nach Anspruch 7, wobei nach dem Ermitteln der Soll-Druckänderung aus der Datenbank das Verfahren nach Anspruch 6 durchgeführt wird, wobei die Soll-Druckänderung über die Zeit mit der tatsächlich gemessenen Druckänderung verglichen wird, und wobei darauf basierend überprüft wird, ob die geplante Handhabung mittels der Unterdruckhandhabungsvorrichtung (10) sicher durchführbar ist.

9. Verfahren nach Anspruch 7 oder 8, wobei ein Testzyklus vor dem Diagnosezyklus durchgeführt wird, und wobei zur Erfassung und Hinterlegung einer Soll-Druckänderung für wenigstens ein Werkstück und/oder einen Zustand der Unterdruckhandhabungsvorrichtung (10) das Verfahren nach Anspruch 6 durchgeführt wird.

10. Verfahren nach einem der vorhergehenden Ansprüche 6 bis 9, wobei der Diagnosezyklus zusätzlich oder alternativ während des Handhabens des Werkstücks durchgeführt wird.

11. Unterdruckhandhabungsvorrichtung (10), welche zur Ausführung des Verfahrens nach einem der vorhergehenden Ansprüche eingerichtet ist, mit einem Sauggreifer (12) und mit einer primären Unterdruckversorgung (18) zur Erzeugung eines Unterdrucks zum Betreiben des Sauggreifers (12), wobei der Sauggreifer (12) eine sekundäre Hilfsunterdruckversorgung (20, 26) umfasst, wobei die Hilfsunterdruckversorgung (20, 26) zur autarken Erzeugung und/oder Bereitstellung von Hilfsunterdruck im Sauggreifer (12) unabhängig von einer externen Energieversorgung ausgebildet ist.

12. Unterdruckhandhabungsvorrichtung (10) nach Anspruch 11, wobei eine Steuereinrichtung (24) vorgesehen ist, die zur Ausführung des Verfahrens nach einem der vorhergehenden Ansprüche ausgebildet und eingerichtet ist, und wobei die Steuereinrichtung (24) zur Überwachung der Betriebsgröße insbesondere eine Sensoreinrichtung umfasst, und/oder wobei eine Hilfsenergieeinrichtung (23) zum autarken Betreiben der Hilfsunterdruckversorgung (20) vorgesehen ist.

13. Unterdruckhandhabungsvorrichtung (10) nach Anspruch 11 oder 12, wobei der Sauggreifer (12) eine Warneinrichtung umfasst.

14. Unterdruckhandhabungsvorrichtung (10) nach einem der vorhergehenden Ansprüche, wobei der Sauggreifer (12) einen Saugkörper (50) umfasst, und wobei am Sauggreifer (12) ein Schutzelement (60) zum Schutz des Saugkörpers (50) vor Beschädigung angeordnet ist.

## Claims

1. A method for the operation of a vacuum handling apparatus (10), particularly for a human-machine collaboration system comprising a vacuum gripper (12) connectable to a primary vacuum system (18) to generate a vacuum, the method comprising the steps of:
a) applying the vacuum gripper (12) to a workpiece and building up a vacuum in the vacuum gripper (12) by means of the primary vacuum system (18);
b) holding the workpiece during its handling by means of the vacuum prevailing in the vacuum gripper (12), and monitoring at least one state variable during the handling; and
c) generating an auxiliary vacuum in the vacuum gripper (12) by means of a self-sufficient, secondary auxiliary vacuum system (20, 26) if the monitored state variable deviates from a target state.

2. The method according to claim 1, wherein in step b) the primary operating power used to operate the primary vacuum system (18) is monitored as a state variable, and step c) is particularly carried out in the event of a detected failure of the primary operating power.

3. The method according to claim 1 or 2, wherein in step c) an action is triggered in addition.

4. The method according to claim 3, wherein the action comprises issuing a warning signal, and/or wherein the action comprises interrupting the movement of the vacuum handling apparatus (10) or moving the vacuum handling apparatus (10) to a safe, final state.

5. The method according to any one of the preceding claims, wherein in step b) the pressure and/or the pressure change in the vacuum gripper (12) is detected as a state variable, and wherein step c) is carried out if the pressure and/or the pressure change in the vacuum gripper (12) exceeds a threshold value.

6. The method according to any one of the preceding claims, wherein a diagnostic cycle is carried out before step a), and the diagnostic cycle comprises the steps of:
ad) applying the vacuum gripper (12) to a workpiece and building up a vacuum in the vacuum gripper (12) by means of the primary vacuum system (18);
bd) detecting the change in pressure in the vacuum gripper (12) over time; and
cd) verifying whether the planned handling by means of the vacuum handling apparatus can be carried out safely.

7. The method according to one of the preceding claims 1 to 5, wherein a diagnostic cycle is carried out before step a), and the diagnostic cycle comprises the steps of:
- detecting the workpiece which is to be handled;
- determining a stored target pressure-change over time from a database, for carrying out steps ad) and bd) of the method according to claim 6; and
- verifying whether the planned handling by means of the vacuum handling apparatus (10) can be carried out safely.

8. The method according to claim 7, wherein after the determination of the target pressure-change from the database, the method according to claim 6 is carried out, wherein the target pressure change over time is compared to the actual, measured pressure change, and based on this, a verification is made as to whether the planned handling by means of the vacuum handling apparatus (10) can be carried out safely.

9. The method according to claim 7 or 8, wherein a test cycle is carried out before the diagnostic cycle, and wherein the method according to claim 6 is carried out for detecting and storing a target pressure change for at least one workpiece and/or a state of the vacuum handling apparatus (10).

10. The method according to any one of the preceding claims 6 to 9, wherein the diagnostic cycle is carried out additionally, or alternatively during the handling of the workpiece.

11. A vacuum handling apparatus (10) adapted to carry out the method according to any one of the preceding claims, having a vacuum gripper (12) and a primary vacuum system (18) for generating a vacuum for operating the vacuum gripper (12), wherein the vacuum gripper (12) comprises a secondary, auxiliary vacuum system (20, 26), and wherein the auxiliary vacuum system (20, 26) is designed for self-sufficient generation and/or provision of an auxiliary vacuum in the vacuum gripper (12) independently of an external power supply.

12. The vacuum handling apparatus (10) according to claim 11, wherein a control device (24) is provided which is designed and adapted to carry out the method according to any one of the preceding claims, and wherein the control device (24) particularly comprises a sensor device for monitoring the state variable, and/or wherein an auxiliary power device (23) is provided for self-sufficient operation of the auxiliary vacuum system (20) .

13. The vacuum handling apparatus (10) according to claim 11 or 12, wherein the vacuum gripper (12) comprises a warning device.

14. The vacuum handling apparatus (10) according to any one of the preceding claims, wherein the vacuum gripper (12) comprises a suction body (50), and wherein a protective element (60) for protecting the suction body (50) from damage is arranged on the vacuum gripper (12).

## Revendications

1. Procédé destiné à faire fonctionner un dispositif de manipulation par dépression (10), en particulier pour un système de collaboration homme-machine, comprenant une ventouse (12) qui peut être reliée à une alimentation en dépression primaire (18) pour générer une dépression, le procédé comprenant les étapes suivantes consistant à:
a) appliquer la ventouse (12) à une pièce et établir une dépression dans la ventouse (12) au moyen de l'alimentation en dépression primaire (18);
b) maintenir la pièce pendant sa manipulation au moyen de la dépression présente dans la ventouse (12) et surveiller au moins une grandeur de fonctionnement pendant la manipulation; et
c) générer une dépression auxiliaire dans la ventouse (12) au moyen d'une alimentation en dépression auxiliaire secondaire autarcique (20, 26) si la grandeur de fonctionnement surveillée s'écarte d'un état nominal.

2. Procédé selon la revendication 1, dans lequel, à l'étape b), l'énergie de fonctionnement primaire pour faire fonctionner l'alimentation en dépression primaire (18) est surveillée en tant que grandeur de fonctionnement, et dans lequel l'étape c) est mise en oeuvre en particulier lorsqu'une défaillance de l'énergie de fonctionnement primaire est détectée.

3. Procédé selon la revendication 1 ou 2, dans lequel une action est en sus déclenchée à l'étape c).

4. Procédé selon la revendication 3, dans lequel l'action comprend l'émission d'un signal d'avertissement, et/ou dans lequel l'action comprend l'interruption du mouvement du dispositif de manipulation par dépression (10) ou le déplacement du dispositif de manipulation par dépression (10) vers un état final sûr.

5. Procédé selon l'une quelconque des revendications précédentes, dans lequel, à l'étape b), la pression et/ou le changement de pression est détecté(e) en tant que grandeur de fonctionnement dans la ventouse (12), et dans lequel l'étape c) est mise en oeuvre lorsque la pression et/ou le changement de pression dans la ventouse (12) dépasse une valeur limite.

6. Procédé selon l'une quelconque des revendications précédentes, dans lequel un cycle de diagnostic est réalisé avant l'étape a), dans lequel ledit cycle de diagnostic comprend les étapes suivantes consistant à:
ad) appliquer la ventouse (12) à une pièce et établir une dépression dans la ventouse (12) au moyen de l'alimentation en dépression primaire (18);
bd) détecter le changement de pression dans la ventouse (12) au cours du temps; et
cd) vérifier si la manipulation prévue au moyen du dispositif de manipulation par dépression (10) peut être effectuée en toute sécurité.

7. Procédé selon l'une quelconque des revendications précédentes 1 à 5, dans lequel un cycle de diagnostic est réalisé avant l'étape a), dans lequel ledit cycle de diagnostic comprend les étapes suivantes consistant à:
- saisir la pièce à manipuler;
- déterminer un changement prescrit mémorisé de pression au cours du temps pour la mise en oeuvre des étapes ad) et bd) du procédé selon la revendication 6 à partir d'une base de données; et
- vérifiez si la manipulation prévue au moyen du dispositif de manipulation par dépression (10) peut être effectuée en toute sécurité.

8. Procédé selon la revendication 7, dans lequel, après avoir déterminé le changement de pression prescrit à partir de la base de données, le procédé selon la revendication 6 est mis en oeuvre, dans lequel le changement de pression prescrit au cours du temps est comparé au changement de pression réellement mesuré, et dans lequel il est vérifié sur cette base si la manipulation prévue au moyen du dispositif de manipulation par dépression (10) peut être effectuée en toute sécurité.

9. Procédé selon la revendication 7 ou 8, dans lequel un cycle de test est réalisé avant le cycle de diagnostic, et dans lequel le procédé selon la revendication 6 est mis en oeuvre pour détecter et mémoriser un changement de pression prescrit pour au moins une pièce et/ou un état du dispositif de manipulation par dépression (10).

10. Procédé selon l'une quelconque des revendications précédentes 6 à 9, dans lequel le cycle de diagnostic est réalisé en plus ou alternativement lors de la manipulation de la pièce.

11. Dispositif de manipulation par dépression (10) qui est conçu pour mettre en oeuvre le procédé selon l'une quelconque des revendications précédentes, comprenant une ventouse (12) ainsi qu'une alimentation en dépression primaire (18) pour générer une dépression afin de faire fonctionner la ventouse (12), dans lequel la ventouse (12) comprend une alimentation en dépression auxiliaire secondaire (20, 26), dans lequel l'alimentation en dépression auxiliaire (20, 26) est conçue pour générer et/ou fournir de manière autarcique de la dépression auxiliaire dans la ventouse (12) indépendamment d'une alimentation en énergie externe.

12. Dispositif de manipulation par dépression (10) selon la revendication 11, dans lequel un dispositif de commande (24) est prévu qui est conçu et agencé pour mettre en oeuvre le procédé selon l'une quelconque des revendications précédentes, et dans lequel le dispositif de commande (24) comprend en particulier un dispositif capteur pour surveiller la grandeur de fonctionnement, et/ou dans lequel un dispositif d'énergie auxiliaire (23) est prévu pour faire fonctionner de manière autarcique l'alimentation en dépression auxiliaire (20).

13. Dispositif de manipulation par dépression (10) selon la revendication 11 ou 12, dans lequel la ventouse (12) comprend un dispositif d'avertissement.

14. Dispositif de manipulation par dépression (10) selon l'une quelconque des revendications précédentes, dans lequel la ventouse (12) comprend un corps d'aspiration (50), et dans lequel un élément de protection (60) destiné à protéger le corps d'aspiration (50) d'endommagement est disposé sur la ventouse (12).
